# DEMANDE DE BREVET EUROPEEN

(11) **EP 3 838 644 A1**
(43) Date de publication de la demande: **23.06.2021**
(21) Numéro de dépôt: 20212952.4
(22) Date de dépôt: 10.12.2020
(51) Int. Cl.: B60K 6/48, B60K 6/40, B60K 6/387

(54) **MODULE HYBRIDE DESTINE A ETRE DISPOSE DANS UNE CHAINE DE TRACTION D'UN VEHICULE AUTOMOBILE**

(30) Priorité: 19.12.2019 FR 1914834
(71) Demandeur: VALEO EMBRAYAGES, 80009 Amiens (FR)
(72) Inventeur: LEBAS, Gilles, 95892 CERGY PONTOISE (FR); CAUMARTIN, Laurent, 95892 CERGY PONTOISE (FR); BOULET, Jerome, 95892 CERGY PONTOISE (FR); DEQUESNES, Laurent, 95892 CERGY PONTOISE (FR); CORNET, Vincent, 95892 CERGY PONTOISE (FR)
(74) Mandataire: Saadi, Florian

(57) **Abrégé**

L'invention concerne un module hybride comprenant :
- un élément d'entrée de couple (2),
- un premier et deuxième élément de sortie de couple (3, 4),
- une machine électrique tournante (12) comprenant un rotor (13) et un stator (14),
- un support de rotor (5) relié sélectivement à l'élément d'entrée (2) par un embrayage de séparation (10), au premier élément de sortie (3) par un premier embrayage de sortie (20) et au deuxième élément de sortie (4) par un deuxième embrayage de sortie (30,
- un capteur de position rotatif (22) disposé dans la hauteur radiale de la machine électrique tournante (12),
- un moyen de blindage (32) disposé axialement entre le capteur de position rotatif (22) et la machine électrique (12),
chacun des embrayages étant agencé à l'intérieur du rotor de la machine électrique (13). Figure pour l'abrégé : Figure 1

## Description

La présente invention se rapporte au domaine des transmissions pour véhicules automobiles. Elle se rapporte notamment à un module hybride dans lequel une machine électrique tournante est disposée dans la chaine de traction destiné à être disposé dans une chaîne de transmission de véhicule automobile entre un moteur thermique et une boîte de vitesses.

Dans l'état de la technique, il est connu des ensembles de transmission, disposés entre la boîte de vitesses et le moteur thermique et comportant une machine électrique tournante et un embrayage côté moteur permettant d'accoupler en rotation le vilebrequin du moteur thermique au rotor de la machine électrique tournante. Ainsi, il est possible de couper le moteur thermique à chaque arrêt du véhicule et de le redémarrer grâce à la machine électrique tournante. La machine électrique tournante peut également constituer un frein électrique ou apporter un surplus d'énergie au moteur thermique pour l'assister ou éviter que celui-ci ne cale. La machine électrique tournante peut également assurer l'entraînement du véhicule. Lorsque le moteur tourne, la machine électrique tournante joue le rôle d'un alternateur. Un tel ensemble de transmission peut également lier la machine électrique tournante à la boite de vitesses par deux chemins de couples distincts comprenant chacun un embrayage de sortie et un arbre d'entrée de boite de vitesses.

Une telle machine électrique tournante peut être en ligne avec le dispositif de transmission de couple, c'est-à-dire que l'axe de rotation du rotor de la machine électrique tournante est confondu avec l'axe de rotation du dispositif de transmission de couple. En variante, la machine électrique tournante peut être déportée par rapport au dispositif de transmission de couple, c'est-à-dire que l'axe de rotation du rotor de la machine électrique tournante est décalé de l'axe de rotation du dispositif de transmission de couple.

Il est également connu de l'art antérieur, des modules hybrides pour véhicules à moteur comprenant un capteur de position rotatif. Le document US2006/0289209 décrit un ensemble d'entraînement hybride avec une machine électrique. La machine électrique comporte un rotor, un stator et un capteur de position rotatif. L'ensemble d'entraînement hybride comprend un premier embrayage et un second embrayage. Le premier embrayage est conçu comme un embrayage multidisque à sec. Le deuxième embrayage est conçu comme un embrayage humide. Le rotor peut être connecté via ce premier embrayage à un arbre d'entraînement d'un moteur à combustion interne. Le rotor peut également être connecté via le deuxième embrayage à un arbre d'entrée de transmission. Les deux embrayages sont disposés radialement à l'intérieur du rotor. Une partie du support de rotor s'étendant axialement fait saillie latéralement au-delà du rotor et sert en même temps de support de disque externe pour le premier embrayage à friction. Le bras de rotor s'étend initialement dans la direction axiale et présente une partie ultérieure, faisant saillie radialement vers l'extérieur, adjacente à une partie d'un carter d'un volant à double masse. Une structure de dents est disposée sur la circonférence extérieure du logement contigu d'un volant à deux masses, cette structure de dents étant balayée par une partie capteur d'un capteur de position rotatif. Ce capteur de position rotatif est agencé radialement à l'extérieur du logement du volant à deux masses. Un tel agencement n'est cependant pas optimal car encombrant axialement.

En effet, dans les développements actuels des véhicules hybrides, il est nécessaire d'implanter la machine électrique tournante au dispositif de transmission de couple sans toutefois que cela n'impacte la compacité axiale et radiale du module de transmission hybride.

L'invention vise ainsi à permettre de bénéficier d'un module hybride permettant de concilier les exigences de compacité axiale et radiale tout en possédant une durée de vie et une efficacité importante.

L'invention y parvient, selon l'un de ses aspects, grâce à un module hybride destiné à être disposé dans une chaîne de transmission de véhicule automobile comprenant :
- un élément d'entrée de couple en rotation autour d'un axe X, apte à être couplé en rotation à un vilebrequin d'un moteur thermique,
- un premier et deuxième élément de sortie de couple aptes à être couplés en rotation respectivement à un premier et deuxième arbre d'entrée d'une boite de vitesses,
- une machine électrique tournante comprenant un rotor et un stator,
- un support de rotor disposé au sens de la transmission de couple entre l'élément d'entrée et le premier élément de sortie et étant relié sélectivement à l'élément d'entrée par un embrayage de séparation, au premier élément de sortie par un premier embrayage de sortie et au deuxième élément de sortie par un deuxième embrayage de sortie,
- un capteur de position rotatif apte à déterminer une position de rotation du rotor par rapport au stator, le capteur de position étant disposé dans la hauteur radiale de la machine électrique tournante,
- un moyen de blindage disposé axialement entre le capteur de position rotatif et la machine électrique,
caractérisé en ce que chacun des embrayages est agencé à l'intérieur du rotor de la machine électrique.

En positionnant les trois embrayages à l'intérieur du rotor de la machine électrique, il existe un plan perpendiculaire à l'axe de rotation X du module qui coupe à la fois le rotor et chacun des embrayages précités. Le module permet ainsi intégrer concentriquement les trois embrayages au rotor de la machine électrique. Il est alors possible d'obtenir un module hybride présentant un encombrement général réduit et une compacité axiale optimisée. En outre, l'agencement du capteur de position rotatif dans la hauteur radiale de la machine électrique tournante permet de plus disposer le capteur à l'intérieur de la machine électrique afin de laisser la place aux embrayages. Le capteur peut ainsi être monté axialement à côté du rotor.

Dans la suite de la description et les revendications, on utilisera à titre non limitatif et afin d'en faciliter la compréhension, les termes « avant » AV ou « arrière » AR selon la direction par rapport à une orientation axiale déterminée par l'axe X principal de rotation de la transmission du véhicule automobile « l'avant » désignant la partie située à gauche des figures, du côté du moteur, et « l'arrière » désignant la partie droite des figures, du côté de la transmission; et « intérieur /interne » ou « extérieur / externe » par rapport à l'axe X et suivant une orientation radiale, orthogonale à ladite orientation axiale, « l'intérieur » désignant une partie proximale de l'axe longitudinal X et « l'extérieur » désignant une partie distale de l'axe longitudinal X.

Au sens de l'invention, la succession radiale se comprend en termes de distance radiale.

Selon d'autres modes de réalisations avantageux, un tel module hybride peut présenter une ou plusieurs des caractéristiques suivantes prises en combinaison.

Selon un mode de réalisation, chaque embrayage est essentiellement agencé à l'intérieur du rotor de la machine électrique. En d'autre termes, la plus grande partie de chaque embrayage est agencé à l'intérieur du rotor.

Selon un mode de réalisation, le capteur de position rotatif comprend un rotor et un stator, ledit rotor du capteur de position rotatif étant formé ou agencé sur le support de rotor. Le rotor du capteur est ainsi un élément fonctionnel tournant. Le capteur de position rotatif est un élément permettant de détecter avec précision la position de rotation du rotor de la machine électrique et de commander la synchronisation d'un courant appliqué au stator de la machine.

Le stator sert à lire la position angulaire du rotor de capteur de position rotatif. Le rotor possède une découpe en vagues générant une variation de flux dans les bobines du stator du capteur de position rotatif. La forme des vagues de type sinusoïdale crée une variation d'intensité dans la bobine proportionnelle à la distance entre la bobine et le rotor. La variation est alors de type sinusoïdale. Si deux bobines orientées à 90° autour de l'axe de rotation sont utilisées, le signal des deux bobines se trouve décalée de 90° et on obtient un signal de type sinus sur l'une des bobine et cosinus sur l'autre. L'exploitation de ses deux signaux permet de connaitre la position angulaire de l'arbre. Cette position angulaire est exploitée pour asservir la position du rotor de la machine électrique.

De préférence, le capteur de position rotatif est un résolveur.

Selon un mode de réalisation, le capteur de position rotatif est agencé du côté du moteur thermique par rapport à la machine électrique. En variante, il est agencé du côté de la boite de vitesses par rapport à la machine électrique.

Selon un mode de réalisation, le stator du capteur de position rotatif est fixé sur un carter de protection.

Selon un mode de réalisation, le moyen de blindage protège le capteur de position rotatif du flux électromagnétique engendré par la machine électrique, en particulier par les bobinages. Le flux électromagnétique génère des erreurs dans le capteur, en particulier s'il comporte un stator bobiné comme le résolveur. Le capteur recevant un flux électromagnétique important depuis la machine électrique, le flux ensuite généré par le capteur lui-même est donc pollué et peut devenir inexploitable. Il convient donc d'installer un blindage électromagnétique entre le capteur et la machine électrique et en particulier des bobinages actifs du stator.

Selon un mode de réalisation, le blindage comprend ou est entièrement constitué d'un matériau isolant tel que l'acier inoxydable.

Selon un mode de réalisation, le moyen de blindage est relié de manière rotative au rotor de la machine électrique.

En variante, le moyen de blindage est relié de manière non rotative au rotor de la machine électrique. Dans ce cas-là, le moyen de blindage peut être porté par exemple par un carter du module hybride.

Selon un mode de réalisation, le support de rotor comprend une partie d'élongation axiale définissant un porte-disque de sortie de l'embrayage de séparation et un porte-disque de sortie du premier embrayage de sortie, un voile et un moyeu. De préférence, le voile s'étend radialement à partir de la partie d'élongation axiale et en direction de l'axe de rotation. De préférence, le voile relie la partie d'élongation axiale du support de rotor au moyeu du support de rotor. Ainsi, la partie d'élongation axiale défini à la fois une partie du support de rotor, le porte-disque de sortie de l'embrayage d'entré et le porte-disque d'entrée du premier embrayage de sortie. Ceci permet donc de limiter le nombre de pièces et facilite le montage.

Selon un mode de réalisation, le moyeu est disposé radialement au droit dudit capteur de position rotatif. En d'autres termes, il existe un plan perpendiculaire à l'axe de rotation X du module qui coupe à la fois le capteur et le moyeu du support. Il en résulte une conception compacte axialement.

Selon un mode de réalisation, la partie d'élongation axiale du support de rotor, le moyen de blindage et le voile du rotor convergent vers un même point de connexion. De préférence, la partie d'élongation axiale du support du rotor et le moyen de blindage forment une seule et même pièce. En variante, la partie d'élongation axiale du support du rotor et le moyen de blindage sont deux pièces assemblées entre elles par exemple par soudure. Cela permet ainsi de pouvoir réaliser deux pièces simples simple emboutis de faible au lieu d'une seule compliquée, usinée et cher.

Selon un mode de réalisation, le point de connexion est disposé axialement entre le capteur de position rotatif et la machine électrique.

Selon un mode de réalisation, le premier et le deuxième embrayage sont empilés radialement, c'est-à-dire qu'il existe un plan perpendiculaire à l'axe de rotation X du module qui coupe à la fois le premier et le deuxième embrayage. Le premier embrayage se trouve radialement à l'extérieur c'est-à-dire le plus loin de l'axe de rotation X du module et le deuxième embrayage radialement à l'intérieur, c'est-à-dire le plus proche de l'axe de rotation du module. Ceci permet de limiter l'encombrement axial du module de transmission de couple. Dans le cadre de l'invention, on utilisera indifférent les termes premiers et deuxième embrayage ou premier et deuxième embrayage de sortie.

Selon un mode de réalisation, à chaque embrayage est associé un organe d'actionnement avec une butée tournante.

Selon un mode de réalisation, chacun des premiers et deuxièmes embrayages comprend :
- un porte-disque d'entrée,
- un porte-disque de sortie destiné à être couplé en rotation à un arbre d'entrée de la boite de vitesses,
- un ensemble multidisque comprenant au moins un disque de friction solidaire en rotation de l'un des porte-disques d'entrée et de sortie) et au moins deux plateaux respectivement disposés de part et d'autre de l'au moins un disque de friction, les deux plateaux étant solidaires en rotation de l'autre des porte-disques d'entrée et de sortie, et
- un organe d'actionnement configuré pour délivrer un effort d'embrayage,

Selon un mode de réalisation, le module hybride comporte en outre un premier et un deuxième organe de transmission de force mobile en translation selon l'axe X qui coopère d'une part avec l'organe d'actionnement et d'autre part avec l'un des plateaux de manière à transmettre l'effort d'embrayage de l'organe d'actionnement vers l'ensemble multidisque. Le premier organe de transmission de force comprend au moins deux portions axiales faisant saillies axialement du premier organe de transmission en direction du deuxième organe de transmission, lesdites portions axiales traversant des ouvertures du deuxième organe de transmission de manière à être radialement en contact contre le deuxième organe de transmission et à centrer radialement le deuxième organe de transmission par rapport au premier.

Grâce à ces caractéristiques, le deuxième organe de transmission de force est centré simplement à l'aide des portions axiales du premier organe de transmission qui s'insèrent dans les ouvertures du deuxième organe de transmission En effet, les portions axiales du premier organe de transmission de force permettent au deuxième organe de transmission de force d'être placé précisément dans la direction radiale de manière à ce que le deuxième organe de transmission de force transmette l'effort d'embrayage uniformément et continûment au cours du temps à l'embrayage multidisque sans risquer de se décentrer.

Ainsi, le centrage des organes de transmission de force permet d'assurer un équilibrage du module hybride, une homogénéité des efforts exercés entre les organes d'actionnement et les organes de transmission de force, une stabilité du rayon d'application et un parallélisme des efforts exercés par les organes de transmission de force sur les ensembles multidisques.

En outre, un tel centrage ne requiert pas que l'organe de transmission de force et la portion de support du porte-disque extérieur soit disposé du même côté de l'embrayage.

Le premier organe de transmission de force est situé radialement à l'extérieur du deuxième organe de transmission de force. En variante, le premier organe de transmission de force est situé radialement à l'intérieur du deuxième organe de transmission de force.

Selon un mode de réalisation, le premier organe de transmission de force comprend au moins deux portions axiales, de préférence exactement quatre.

Selon un mode de réalisation, les portions axiales sont réparties régulièrement tout autour de l'axe X sur le premier organe de transmission de force et les ouvertures sont réparties régulièrement tout autour de l'axe X sur le deuxième organe de transmission de force. Ainsi, le centrage du deuxième organe de transmission de force se fait uniformément autour de l'axe X grâce à la répartition régulière des portions axiales du premier organe de transmission de force.

Selon un mode de réalisation, le premier organe de transmission de force comprend quatre portions axiales espacées chacune d'un angle d'environ 45° autour de l'axe X.

Selon un mode de réalisation, les portions axiales du premier organe de transmission de force sont situées à une extrémité interne dudit organe.

Selon un mode de réalisation, le premier organe de transmission de force est de forme annulaire et présente une extrémité radiale extérieure recourbée apte à venir en contact axialement avec un plateau de l'ensemble multidisque pour transmettre l'effort d'embrayage et une portion de liaison d'orientation radiale reliant ladite extrémité radiale extérieure recourbée auxdites portions axiales, ladite portion de liaison étant en contact avec un élément de l'organe d'actionnement.

Selon un mode de réalisation, le deuxième organe de transmission de force est de forme annulaire et présente une extrémité radiale extérieure recourbée, une surface d'appui intérieure en contact avec un élément de l'organe d'actionnement et une portion de liaison radiale reliant l'extrémité radiale extérieure recourbée à la surface d'appui intérieure.

Selon un mode de réalisation, les porte-disques d'entrée du premier et deuxième embrayage sont disposés radialement à l'extérieur du porte-disque de sortie de leur embrayage respectif.

Selon un mode de réalisation, le premier et deuxième organe de transmission de force sont disposés à l'arrière des ensembles multidisques.

Selon un mode de réalisation, l'organe d'actionnement est une butée hydraulique comprenant un piston annulaire et une butée tournante, portée par le piston et coopérant avec la surface d'appui de l'organe de transmission de force. Cet organe d'actionnement est aussi appelé actionneur de type « CSC» (« Concentric Slave Cylinder » en anglais).

Le piston annulaire est monté coulissant axialement à l'extérieur d'un tube interne, le piston et le tube formant une chambre d'actionnement. La chambre d'actionnement peut être étanche et remplie d'huile. Le piston et le tube sont fixes en rotation de sorte que la chambre d'actionnement et l'huile ne tourne pas.

Selon un aspect de l'invention, la butée tournante peut être un palier, notamment un palier à roulement. Le palier à roulement peut comporter une bague intérieure fixée au piston, une bague extérieure en appui contre l'organe de transmission de force et des corps roulants interposés entre la bague intérieure et la bague extérieure. De préférence, les corps roulants peuvent être des billes ou des aiguilles.

Selon un mode de réalisation, les porte-disques de sortie sont fixés à un élément de sortie, tel qu'un moyeu de sortie ou formés d'un seul tenant avec lui, ledit moyeu de sortie comportant des cannelures coopérant avec des cannelures complémentaires ménagées à l'extrémité de l'un ou l'autre des arbres d'entrée de la boite de vitesses.

Avantageusement, la machine électrique est une machine électrique 48V ou haute tension.

Enfin, l'invention a également pour objet un véhicule automobile comprenant un module hybride selon la présente invention.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.

[fig.1] représente une vue partielle en coupe axiale d'un module hybride selon l'invention.

[fig.2] représente une vue en perspective d'un premier organe de transmission de force selon l'invention.

[fig.3] représente une vue en perspective d'un deuxième organe de transmission de force selon l'invention.

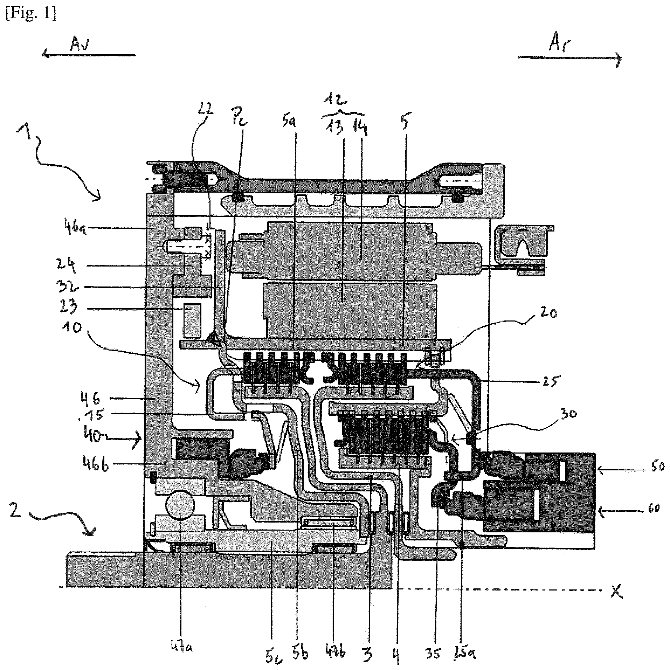

En relation avec la figure 1, on observe un module hybride 1 comprenant :
- un élément d'entrée de couple 2, en rotation autour d'un axe de rotation X, apte à être couplé en rotation à un vilebrequin d'un moteur thermique (non représenté),
- un premier élément de sortie de couple 3, apte à être couplé en rotation à un premier arbre d'entrée d'une boîte de vitesses (non représentée),
- un deuxième élément de sortie de couple 4 apte à être couplé en rotation à un deuxième arbre d'entrée d'une boîte de vitesses (non représentée).

Dans l'exemple considéré, le deuxième élément de sortie de couple 4 est disposé en parallèle du premier élément de sortie 3 au sens de la transmission de couple. Chacun de ces éléments tourne autour d'un axe de rotation X du module.

Un dispositif d'amortisseur de torsion (non représenté) peut être positionné entre le vilebrequin du moteur thermique et l'élément d'entrée de couple 2.

En variante ou en complément un dispositif d'amortissement de torsion peut être positionné en sortie des deux arbres 3 et 4.

Le module hybride de la présente invention comprend également une machine électrique tournante 12 comprenant un rotor 13 et un stator 14. Le stator 14 est fixe et disposé autour du rotor 13. Le rotor 13 est disposé au sens de la transmission de couple entre l'élément d'entrée de couple 2 d'une part et le premier et deuxième élément de sortie 3,4 d'autre part.

Dans l'exemple considéré, la machine électrique tournante 12 peut être une machine synchrone à aimants permanents.

Le rotor 13 de la machine électrique tournante est relié sélectivement à l'élément d'entrée 2 par un embrayage de séparation 10, au premier élément de sortie 3 par un premier embrayage de sortie 20, et au deuxième élément de sortie 4 par un deuxième embrayage de sortie 30.

Le module 1 comprend également un support de rotor 5 agencé entre l'élément d'entrée de couple 2 et les premiers et deuxièmes éléments de sortie de couple 3,4, au sens de la transmission de couple. Dans l'exemple considéré, le rotor 13 est disposé directement sur le support de rotor 5 sans pièce supplémentaire. En variante, une pièce supplémentaire solidaire du support 5 est prévue comme support de rotor.

Ainsi, le support 5 maintient la machine électrique tournante 12 en rotation. La machine électrique tournante 12 est alors appelée « in-line », c'est-à-dire que l'axe de rotation de la machine électrique tournante 12 est confondu avec l'axe de rotation X du module hybride 1.

Le support de rotor 5 comprend une partie d'élongation axiale 5a définissant un porte-disque de sortie de l'embrayage de séparation 10 et un porte-disque de sortie du premier embrayage de sortie 20, un voile 5b et un moyeu 5c.

Le voile 5b s'étend radialement à partir de la partie d'élongation axiale 5a en direction de l'axe de rotation X du module. Le voile 5b relie le moyeu 5c à la partie d'élongation axiale du support du rotor 5.

Dans l'exemple considéré, la partie d'élongation axiale 5a et le voile 5b sont deux pièces solidaires entre elles et assemblées par soudure, par exemple soudure au laser.

Dans l'exemple considéré, chacun des embrayages, c'est-à-dire l'embrayage de séparation 10, le premier et deuxième embrayage de sortie 20, 30 est situé radialement à l'intérieur du rotor 13. Ainsi, il existe un plan perpendiculaire à l'axe X qui passe à la fois par chacun des embrayages précités et le rotor 13.

L'embrayage de séparation 10 accouple sélectivement et par friction l'élément d'entrée de couple 2 et le support 5 et comprend :
- un porte-disque d'entrée solidaire en rotation de l'élément d'entrée de couple 2,
- un porte-disque de sortie défini par le support 5 et
- un ensemble multidisque comprenant plusieurs disques de friction, ici quatre, solidaires en rotation du porte-disque d'entrée, plusieurs plateaux respectivement disposés de part et d'autre de chaque disque de friction, solidaires en rotation du porte-disque de sortie et des garnitures de friction disposées entre les plateaux et un disque de friction, fixées de chaque côté des disques de friction, l'embrayage 10 décrivant une position débrayée et une position embrayée dans laquelle lesdits plateaux et le disque de friction pincent les garnitures de friction de manière à transmettre un couple entre le porte-disque d'entrée et le porte-disque de sortie.

Chaque porte-disque synchronise en rotation l'ensemble des plateaux et l'ensemble des disques de friction. Chaque portes-disque comporte une jupe cylindrique sur lesquelles sont montées les plateaux et les disques de friction.

Les disques de friction de l'ensemble multidisque de l'embrayage de séparation coopèrent avec la jupe cylindrique du porte-disque d'entrée selon leur périphérie radialement intérieure par cannelures. Les disques de friction sont donc radialement à l'extérieur de la jupe cylindrique.

Les plateaux de l'ensemble multidisque de l'embrayage de séparation 10 coopèrent avec la jupe cylindrique du porte-disque de sortie selon leur périphérie radialement extérieure par cannelures. Les plateaux sont donc radialement à l'intérieur de la jupe cylindrique.

Dans l'exemple considéré, le module 1 comprend également un premier embrayage de sortie 20 accouplant sélectivement et par friction le support 5 et le premier élément de sortie 3.

Ainsi, le premier embrayage de sortie 20 comprend :
- un porte-disque d'entrée défini par le support 5,
- un porte-disque de sortie solidaire en rotation du premier élément de sortie 4 et,
- un ensemble multidisque comprenant plusieurs disques de friction, ici cinq, solidaires en rotation du porte-disque de sortie, plusieurs plateaux respectivement disposés de part et d'autre de chaque disque de friction, solidaires en rotation du porte-disque d'entrée et des garnitures de friction disposées entre les plateaux et un disque de friction, fixées de chaque côté des disques de friction, l'embrayage 20 décrivant une position débrayée et une position embrayée dans laquelle lesdits plateaux et le disque de friction pincent les garnitures de friction de manière à transmettre un couple entre le porte-disque d'entrée et le porte-disque de sortie 4.

Dans l'exemple considéré, le module 1 comprend un deuxième embrayage de sortie 30 analogue au premier embrayage de sortie 20, accouplant sélectivement et par friction le support 5 et le deuxième élément de sortie 4.

Le deuxième embrayage de sortie 30 comprend :
- un porte-disque d'entrée solidaire en rotation du support 5,
- un porte-disque de sortie solidaire en rotation du deuxième élément de sortie 4 et,
- un ensemble multidisque comprenant plusieurs disques de friction, ici six.

De manière commune aux trois embrayages 10, 20 et 30, les garnitures peuvent être fixées sur les disques de friction, notamment par collage, notamment par rivetage, notamment par surmoulage. En variante, les garnitures sont fixées sur les plateaux.

Chaque porte-disque peut synchroniser en rotation l'ensemble des plateaux ou l'ensemble des disques de friction.

Selon un aspect de l'invention, les plateaux peuvent être solidaires en rotation du porte-disque d'entrée et les disques de friction peuvent être solidaires du porte-disque de sortie. En variante, les plateaux peuvent être solidaires en rotation du porte-disque de sortie. Les disques peuvent être solidaires en rotation du porte-disque d'entrée.

De préférence, les embrayages sont de type humide et comportent entre deux et sept disques de friction, de préférence quatre disques de friction. De tels embrayages multidisques permettent de limiter la hauteur radiale de limiter l'étendue axiale. En variante, ils peuvent être de type secs.

Les embrayages de sortie 20, 30 peuvent être agencés pour ne pas être simultanément dans la même configuration embrayée. En revanche, ils peuvent simultanément être configurés dans leur position débrayée.

Dans l'exemple considéré, le premier embrayage de sortie 20 et le deuxième embrayage de sortie 30 se succèdent radialement en rapprochement de l'axe X. Le premier et deuxième embrayage de sortie 20, 30 sont situés radialement à l'intérieur du rotor 13, c'est-à-dire qu'il existe un plan perpendiculaire à l'axe de rotation X qui coupe les embrayages de sortie 20 et 30 et le rotor.

Ici, le premier embrayage 20 est disposé radialement à l'extérieur du deuxième embrayage 30.

Dans l'exemple considéré, le module 1 comprend en outre un carter de protection 46. Le carter de protection 46 est constitué d'une paroi radiale 46a et d'une portion axiale 46b comprenant un épaulement. La portion axiale 46b définit une extrémité radiale, en particulier l'extrémité radiale interne du carter de protection 46.

Le carter 46 définit une chambre étanche remplie d'huile dans laquelle est disposé l'ensemble des embrayages. Dans l'exemple considéré, les embrayages sont donc tous de type humide ?

Dans l'exemple considéré, le module 1 comprend un organe d'actionnement 40 et un organe de transmission de force 15 associé à l'embrayage de séparation 10. Un organe de maintien en position débrayée, tel qu'une rondelle belleville utilisé dans l'exemple considéré peut être prévu pour repousser l'organe de transmission de force 15 de l'embrayage de séparation 10. L'embrayage de séparation 10 est de type « normalement ouvert ».

L'organe de transmission de force 15 est mobile axialement pour transmettre l'effort d'actionnement de l'organe d'actionnement 40 vers l'embrayage de séparation 10. L'organe de transmission de force exerce un effort axial sur l'ensemble multidisque correspondant pour déplacer les plateaux vers les disques. L'actionnement est ainsi de type « poussé ».

L'organe de transmission de force 15 présente une extrémité radiale extérieure recourbée définissant une surface d'appui pour exercer l'effort axial sur l'ensemble multidisque de l'embrayage de séparation 10, continue ou discontinue dans l'exemple considéré.

L'organe de transmission de force 15 de l'embrayage de séparation 10 présente trois coudes entre lesquelles sont interposées des portions planes. Cela permet d'avoir un actionnement compact axialement.

Lors de l'assemblage le piston 15 et le support rotor 5, en particulier le voile 5b, doivent être solidaires axialement tout en permettant le mouvement axial du piston 15 lors de sa commande. Comme cela est représenté dans l'exemple considéré, cela est réalisé grâce à la découpe rentrante du piston 15 dans le voile 5b. La découpe du piston 15 est d'un diamètre supérieur au voile 5b ce qui permet à la portion du piston de diamètre supérieur d'empêcher les deux pièces de se désolidariser.

L'organe d'actionnement 40 comprend un piston annulaire monté coulissant axialement à l'extérieur d'un tube interne, le piston et le tube formant une chambre d'actionnement. L'organe d'actionnement 40 comporte une butée tournante, qui est ici un palier à roulement, portée par le piston et coopérant avec une extrémité radiale intérieure de l'organe de transmission de force. Les pressions fluidiques associées aux positions « embrayée » et « débrayée » sont les pressions de la chambre d'actionnement.

Le palier à roulement comporte une bague extérieure fixée au piston, une bague intérieure en appui contre l'organe de transmission de force et des corps roulants interposés entre la bague intérieure et la bague extérieure. Le piston est de révolution autour de l'axe de rotation X.

Dans l'exemple considéré, le tube de l'organe d'actionnement 40 de l'embrayage de séparation est ménagé dans le carter de protection 46 qui définit un réseau d'alimentation en fluide de l'organe d'actionnement 40 ainsi que le circuit de refroidissement de l'embrayage 10.

Dans l'exemple considéré, les embrayages 10, 20, 30 sont disposés dans une chambre étanche contenant de l'huile, le carter de protection 46 définit en partie cette chambre étanche.

Dans l'exemple considéré, le module hybride 1 comprend deux organes de roulement qui portent le support 5, à savoir ici un roulement à billes 47a et un roulement douille à aiguilles 47b. Les organes de roulement 47a, 47b sont disposés radialement entre l'élément intermédiaire 5 et le carter de protection 46. Plus particulièrement, les organes de roulement 47 sont disposés entre une extrémité radiale du carter de protection 46, telle que la portion axiale 46b et une portion axiale 5a de l'élément intermédiaire 5.

L'organe de roulement à billes 47a peut être à gorge profonde ou à 4 points de contact afin de reprendre plus efficacement les efforts axiaux. Cet organe de roulement permet d'obtenir un guidage amélioré du moteur électrique par le carter de protection et d'éviter au maximum son basculement.

L'organe de roulement 47a est une liaison rotule et assure une liaison pivot indispensable au bon guidage de la machine électrique tournante. En effet, l'étude cinématique d'un organe de roulement (de manière générale un roulement à une rangée de billes) conduit à modéliser ce composant par une liaison rotule. Les actions mécaniques transmissibles par les contacts entre les billes et les bagues sont essentiellement radiales ou obliques et concourantes.

Ces deux roulements permettent en particulier d'absorber les efforts de basculement. De par sa conception, le roulement douilles à aiguilles 47b sera plus à même de reprendre les efforts radiaux dus à la masse et aux vibrations du rotor 13, les aiguilles ayant plus de surface en contact que les billes. On placera de préférence le roulement douilles à aiguilles 47b au plus près du centre de gravité du rotor pour reprendre un maximum d'effort radial. Le roulement à billes 47a absorbera lui une partie secondaire de l'effort radial et tous les efforts axiaux.

Dans l'exemple considéré, l'organe de roulement 47a comporte une bague intérieure et une bague extérieure. Avantageusement, la bague intérieure est au contact du moyeu du support du rotor 5c et la bague extérieure est au contact avec le carter de protection, de préférence avec la portion axiale 46b du carter de protection 46.

Dans l'exemple considéré, l'organe de roulement à billes 47a est bloqué sur son extrémité axiale avant par deux circlips et sur son extrémité axiale arrière par un épaulement de la portion axiale 46b du carter 46 et un épaulement du moyeu 5c.

Le rotor 13 via son support 5 est alors bloqué dans les deux directions axiales, ce qui permet la reprise de tous les efforts axiaux issu du support 5. Ces efforts peuvent être des efforts actionnement de l'embrayage de séparation 10 dirigés vers la boîte de vitesses, des efforts actionnement du premier ou deuxième embrayage de sortie 20, 30 dirigés vers le moteur thermique ou des efforts de boîte lorsque les arbres de boîtes transmettent du couple (efforts positifs ou négatifs).

Avantageusement, l'embrayage de séparation 10, l'organe d'actionnement 40 associé à l'embrayage de séparation 10 et au moins un organe de roulement 47 se succèdent radialement en rapprochement de l'axe X.

Dans l'exemple considéré, le module 1 comprend également un organe d'actionnement 50, en particulier un organe d'actionnement à butée tournante associé au premier embrayage de sortie 20.

Le module 1 comprend également un organe d'actionnement 60, en particulier un organe d'actionnement à butée tournante associé au deuxième embrayage de sortie 30.

Ces organes d'actionnement 50, 60 reprennent les mêmes éléments que ceux détaillés en lien avec l'organe d'actionnement 40 de l'embrayage de séparation 10.

Dans l'exemple considéré, les organes d'actionnement 50 et 60 sont logés dans une même enveloppe et ne forment qu'un seul et même composant appelé classiquement système hydraulique de commande ou double actionneur concentrique. Les formes des pistons et/ou des organes d'actionnement 40, 50, 60 sont choisis de sorte qu'ils puissent s'empiler radialement ce qui contribue à la compacité axiale du module 1.

Le module 1 comporte en outre un premier et un deuxième organe de transmission de force 25, 35 mobile en translation selon l'axe X qui coopère d'une part avec l'organe d'actionnement 50, 60 et d'autre part avec l'un des plateaux de manière à transmettre l'effort d'embrayage de l'organe d'actionnement vers l'ensemble multidisque correspondant.

Dans l'exemple considéré, l'organe de transmission de force 25 est mobile axialement pour transmettre l'effort d'actionnement de l'organe d'actionnement 50 vers le premier embrayage de sortie 20.

L'organe de transmission de force 35 est mobile axialement pour transmettre l'effort d'actionnement de l'organe d'actionnement 60 vers le deuxième embrayage de sortie 30.

Les organes de transmission de force des embrayages 10, 20, 30 présentent chacun une extrémité radiale extérieure recourbée définissant une surface d'appui pour exercer l'effort axial sur les ensembles multidisques. L'actionnement est ainsi de type « poussé ».

Un organe de maintien en position débrayée, tel qu'une rondelle belleville peut être prévu pour repousser les organes de transmission de force des embrayages de sortie 20, 30. Les embrayages de sortie 20, 30 sont de type « normalement ouvert ».

De manière à appuyer uniformément sur les plateaux des ensembles multidisques, et à éviter que l'organe de transmission correspondant 15, 25, 35 se déloge de sa position, l'organe de transmission est centré par rapport à l'axe X et notamment par rapport au porte-disque qui est accouplé avec les plateaux. En effet, l'organe de transmission 15, 25, 35 exerçant un effort sur les plateaux, pour éviter tout risque d'usure ou de casse, l'organe de transmission 15, 25, 35 est en contact avec le porte-disque accouplé avec les plateaux.

Pour cela, l'organe de transmission 15 de l'embrayage de séparation 10 et l'organe de transmission 25 du premier embrayage de sortie 20 passent au travers d'un orifice ménagé dans le support 5 qui est associé au porte-disque de sortie de l'embrayage de séparation 10 et au porte-disque d'entrée 6 du deuxième embrayage 20. Ainsi, les organes de transmission 15, 25 sont accouplés en rotation avec l'élément intermédiaire 5 et sont centrés par rapport aux porte-disques où sont accouplés les plateaux.

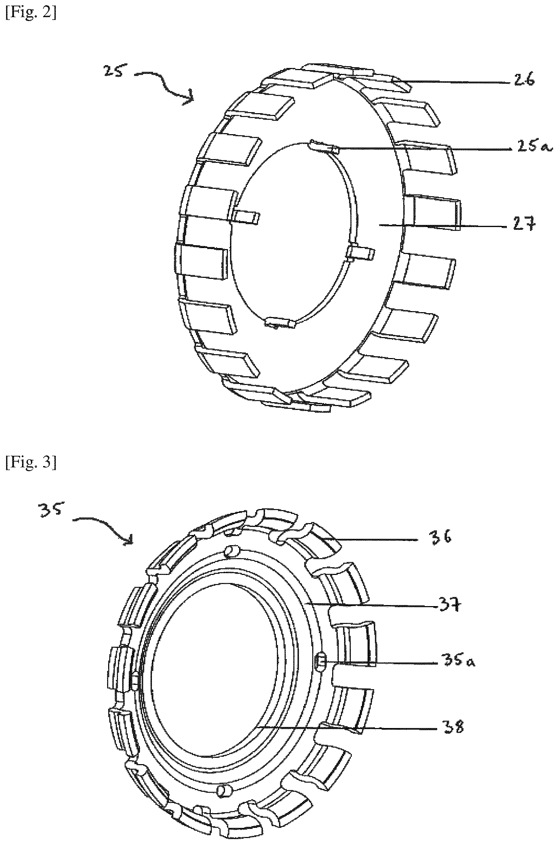

En relation avec les figures 1, 2 et 3, on peut apercevoir que pour centrer l'organe de transmission de force 35, le premier organe de transmission de force 25 comprend au moins deux portions axiales 25a, faisant saillies axialement du premier organe de transmission 25 en direction du deuxième organe de transmission 35. Ces portions axiales 25a traversent des ouvertures 35a du deuxième organe de transmission 35 de manière à être radialement en contact contre le deuxième organe de transmission 35 et à centrer radialement le deuxième organe de transmission 35 par rapport au premier 25.

Ainsi, les portions axiales 25a du premier organe de transmission de force 25 ont une forme complémentaire aux ouvertures 35a du deuxième organe de transmission de force 35 permettant de réaliser à la fois le centrage de l'organe de transmission de force 35 mais également l'entrainement en rotation de l'organe de transmission 35 avec le porte-disque d'entrée du deuxième embrayage de sortie 30 à partir de l'organe de transmission 25.

Pour centrer de manière optimale l'organe de transmission 35 tout en limitant les coûts de fabrication, l'organe de transmission 25 comprend quatre portions axiales 25a régulièrement réparties tout autour de l'axe X. L'organe de transmission 35 comprenant un nombre d'ouvertures 35a au moins identique au nombre de portions axiales 25a. Les ouvertures 35a sont situés au regard des extension axiales 25a.

Comme cela est visible sur les figues 2 et 3, le premier organe de transmission de force 25 est de forme annulaire et présente une extrémité radiale extérieure recourbée 26 apte à venir en contact axialement avec un plateau de l'ensemble multidisque 20 pour transmettre l'effort d'embrayage. Dans l'exemple considéré, l'extrémité extérieure 26 comporte une pluralité de doigts. L'organe de transmission 25 présente également une portion de liaison d'orientation radiale 27 reliant ladite extrémité radiale extérieure recourbée 26 auxdites portions axiales 25a. La portion de liaison 27 est en contact avec un élément de l'organe d'actionnement 50.

Les portions axiales 25a sont réalisées par découpe de matière dans la portion de liaison 27 puis orientées axialement par pliage par exemple.

Le deuxième organe de transmission de force 35 est de forme annulaire et présente une extrémité radiale extérieure recourbée 36 et une surface d'appui intérieure 38 en contact avec un élément de l'organe d'actionnement 60. Une portion de liaison radiale 37 relie l'extrémité radiale extérieure 36 à la surface d'appui intérieure 38.

Les ouvertures 35a sont situées dans la portion de liaison radiale 37. Les ouvertures 35a sont réalisées par découpage et peuvent être rectangulaires ou comporter des rayons aux extrémités comme cela est le cas dans l'exemple considéré.

Le module hybride 1 comprend en outre un capteur de position rotatif 22 apte à déterminer une position de rotation du rotor 13 par rapport au stator 14. Le capteur de position 22 est disposé dans la hauteur radiale de la machine électrique tournante 12. En d'autre termes, le capteur 22 chevauche radialement la machine électrique 12. Le capteur 22 comprend un rotor 23 et un stator 24. Ainsi, le rotor du capteur de position rotatif 23 est disposé dans la hauteur radiale du rotor de la machine électrique 13 et le stator du capteur de position rotatif 24 est disposé dans la hauteur radiale du stator de la machine électrique 14.

Le capteur de position rotatif 22 est conçu de préférence comme un résolveur. Le rotor du capteur de position rotatif 23 est formé ou agencé sur le support de rotor 5. Comme cela est représenté sur la figure 1, le rotor du capteur de position rotatif 23 peut être formé ou agencé en particulier sur le voile 5b du support du rotor. En variante, le rotor du capteur de position rotatif 23 peut être formé ou agencé sur la partie d'élongation axiale 5a du support de rotor. Le stator 24 du capteur de position rotatif 23 est quant à lui est fixé sur le carter de protection 46, au moyen de rivets par exemple.

Dans l'exemple considéré, le capteur de position rotatif 22 est agencé du côté du moteur thermique par rapport à la machine électrique 12. Le moyeu 5c est disposé radialement au droit dudit capteur de position rotatif 22. Le moyeu 5c et le capteur 22 sont donc positionnés du même côté du module hybride 1, à savoir l'avant du module.

En relation avec la figure 1, on observe également que le module 1 comprend un moyen de blindage 32. Le moyen de blindage 32 s'étend radialement et sensiblement sur la hauteur radiale de la machine électrique 12. En d'autres termes, le diamètre interne et externe du moyen de blindage correspondent sensiblement aux diamètres interne et externe respectifs de la machine électrique 12.

Le moyen de blindage 32 est disposé axialement entre le capteur de position rotatif 22 et la machine électrique 12 de manière à protéger le capteur 22 du flux électromagnétique de la machine électrique.

Dans l'exemple considéré, le moyen de blindage 32 s'étend radialement à partir du support de rotor 5, en particulier à partir de la partie d'élongation axiale 5a. Ainsi, le moyen de blindage 32 est relié de manière rotative au rotor de la machine électrique 13. Sur la figure 1, le moyen de blindage 32 et la partie d'élongation axiale du support du rotor 5a forment une seule et même pièce. En variante non représentée, le moyen de blindage 32 et la partie d'élongation axiale du support du rotor 5a sont deux pièces reliées entre elles, par exemple par soudure.

Le moyen de blindage 32 comprend de préférence un matériau isolant. Le moyen de blindage comprend ou est constitué d'acier inoxydable. Le moyen de blindage 32 prend la forme d'un anneau qui s'étend sensiblement dans la direction radiale et circonférentielle.

La partie d'élongation axiale du support de rotor 5a, le moyen de blindage 32 et le voile du rotor 5b convergent vers un même point de connexion Pc. Le point de connexion Pc est disposé axialement entre le capteur de position rotatif 22 et la machine électrique 12. Ce point de connexion correspond à l'endroit où les différentes pièces précitées se rejoignent. Il peut en particulier s'agir de la zone où les différentes pièces précitées sont assemblées entre elles. Dans ce cas-là, le point de connexion peut correspondre au point de soudure.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Dans les revendications, tout signe de référence entre parenthèses ne saurait être interprété comme une limitation de la revendication.

## Revendications

1. Module hybride (1) destiné à être disposé dans une chaîne de transmission de véhicule automobile comprenant :
- un élément d'entrée de couple (2) en rotation autour d'un axe (X), apte à être couplé en rotation à un vilebrequin d'un moteur thermique (MT),
- un premier et deuxième élément de sortie de couple (3, 4), aptes à être couplés en rotation respectivement à un premier et deuxième arbre d'entrée d'une boite de vitesses (BV),
- une machine électrique tournante (12) comprenant un rotor (13) et un stator (14),
- un support de rotor (5) disposé au sens de la transmission de couple entre l'élément d'entrée (2) et le premier élément de sortie (3) et étant relié sélectivement à l'élément d'entrée (2) par un embrayage de séparation (10), au premier élément de sortie (3) par un premier embrayage de sortie (20) et au deuxième élément de sortie (4) par un deuxième embrayage de sortie (30,
- un capteur de position rotatif (22) apte à déterminer une position de rotation du rotor (13) par rapport au stator (14), le capteur de position (22) étant disposé dans la hauteur radiale de la machine électrique tournante (12),
- un moyen de blindage (32) disposé axialement entre le capteur de position rotatif (22) et la machine électrique (12),
**caractérisé en ce que** chacun des embrayages (10, 20, 30) est agencé à l'intérieur du rotor de la machine électrique (13).

2. Module hybride (1) selon la revendication 1 ou la revendication 2, **caractérisé en ce que** ledit capteur de position rotatif (22) comprend un rotor (23) et un stator (24), ledit rotor du capteur de position rotatif (23) étant formé ou agencé sur le support de rotor (5).

3. Module hybride (1) selon la revendication précédente, **caractérisé en ce que** le stator du capteur de position rotatif (23) est fixé sur un carter de protection (46).

4. Module hybride (1) selon l'une quelconque des revendications précédentes, **caractérisé en ce que** ledit support de rotor (5) comprend une partie d'élongation axiale (5a) définissant un porte-disque de sortie de l'embrayage de séparation (10) et un porte-disque de sortie du premier embrayage de sortie (20), un voile (5b) et un moyeu (5c).

5. Module hybride (1) selon la revendication précédente, **caractérisé en ce que** ledit moyeu (5c) est disposé radialement au droit dudit capteur de position rotatif (22).

6. Module hybride (1) selon la revendication 4 ou 5, **caractérisé en ce que** la partie d'élongation axiale du support de rotor (5a), le moyen de blindage (32) et le voile du rotor (5b) convergent vers un même point de connexion (Pc).

7. Module hybride (1) selon la revendication précédente, **caractérisé en ce que** ledit point de connexion (Pc) est disposé axialement entre le capteur de position rotatif (22) et la machine électrique (12).

8. Module hybride (1) selon l'une quelconque des revendications précédentes, **caractérisé en ce que** le moyen de blindage (32) est relié de manière rotative au rotor de la machine électrique (13).

9. Module hybride (1) selon l'une quelconque des revendications précédentes, **caractérisé en ce que** le premier et deuxième embrayage de sortie (20, 30) sont empilés radialement.

10. Module hybride (1) selon l'une quelconque des revendications précédentes, **caractérisé en ce que** à chaque embrayage (10, 20, 30) est associé un organe d'actionnement (40, 50, 60) avec une butée tournante.
